# EUROPEAN PATENT SPECIFICATION

(11) **EP 1 230 504 B1**
(45) Date of publication and mention of the grant of the patent: **23.06.2004**
(21) Application number: 00971551.7
(22) Date of filing: 20.10.2000
(51) Int. Cl.: F16L 15/00

(54) **PIPE JOINT**
ROHRVERBINDUNG
RACCORD DE TUYAUX

(30) Priority: 04.11.1999 GB 9926019
(43) Date of publication of application: 14.08.2002
(73) Proprietor: Lattice Intellectual Property Limited, London WC2N 5EH (GB)
(72) Inventor: LOPRESTO, Claudio Domingo, Buenos Aires (AR)
(74) Representative: Kunz, Herbert, Dr.
(86) International application number: PCT/GB2000/004075
(87) International publication number: WO 2001/033131

(56) References cited:
- FR-A- 2 543 653
- US-A- 3 499 666
- US-A- 3 722 925

## Description

The present invention relates to a pipe joint in which the ends of two pipes each incorporating a liner are joined together at their ends so that adjoining portions of the liners sealingly engage each other.

Document US-A-3 499 666 discloses a pipe joint comprising a first and a second pipe having threaded ends. The pipes are provided with internal liners which extend beyond the metal rings which hold them in place. In use the protruding portions of the liners abut each other and are deformed to fill any voids between the pipe ends.

According to the present invention, we provide a pipe joint comprising a first pipe having an externally threaded end, a second pipe having an externally threaded end, a first liner extending into the first pipe with a portion protruding from the end of the first pipe, a second liner extending into the second pipe with a portion protruding from the end of the second pipe, wherein, in use, the portion of the first liner overlaps the portion of the second liner, a collar having internal threads which engage the threaded ends of the pipes, the first and second tube ends, collar and portions being dimensioned such that on making up the joint by threading the collar to the first and second ends of the pipes, the portions sealingly abut each other where they overlap.

Preferably the first liner has a flange which, in use, overlaps the portion of the second liner. Suitably the portion of the second liner has an external circumferential abutment for engagement with the overlapping portion of the first liner.

An embodiment of the invention will now be particularly described with reference to the drawings in which:-
Figure 1 is a longitudinal view in section of a first lined pipe,
Figure 2 is a longitudinal view in section of a second lined pipe, and

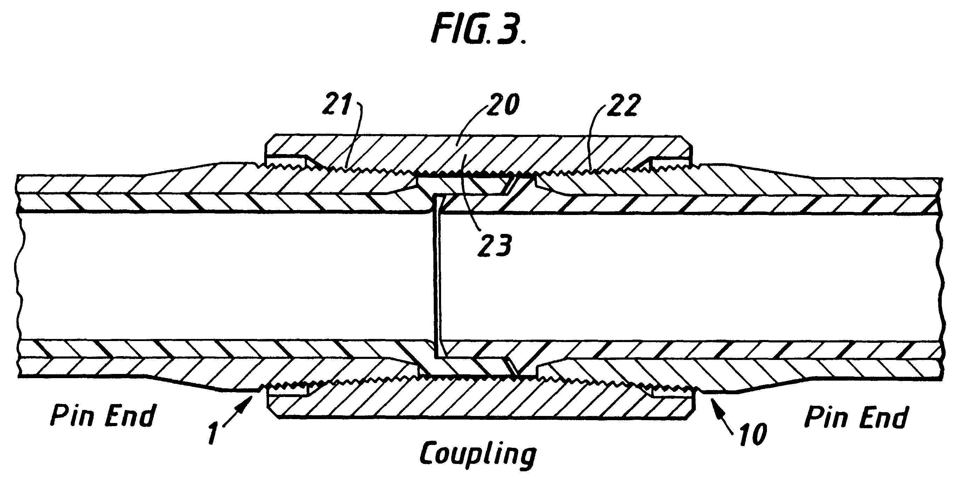

Figure 3 is a longitudinal view in section of a joint formed by the two lined pipes.

The first pipe 1 which is of steel has an externally threaded end 2 in which the threads 3 are formed on an outwardly tapering thickened portion 4. The threads 3 themselves taper inwardly towards the end of the pipe 1. Located within the pipe 1 is a first, female-type liner 5 which is of a suitable plastics material such as polyethylene. The liner 5 terminates in a portion 6 protruding from the end 2 of the pipe 1. The portion 6 is formed with a flange 7 of larger diameter than the remainder of the liner 5, the flange 7 being connected to the remainder of the pipe 1 by a shoulder 8 which abuts against the end 2 of the pipe 1. The external diameter of the flange 7 is approximately level with the external diameter of the forward end of the threads 3 for purposes to be described.

The liner 5 may be inserted into the pipe 1 to be lined by any suitable conventional process e.g. the SWAGELINING (registered trade mark) process, by so-called roll down or by any other convenient method.

In the SWAGELINING method, the liner 5 is selected to have a larger external diameter than the internal diameter of the pipe 1 to be lined. The liner 5 is then drawn under tension through a die (not shown) into and through the pipe to be lined, the die being selected to have a smaller aperture diameter than the pipe to be lined. A portion of the liner 5 is allowed to protrude from the end of the pipe 1. The liner 1 is then allowed to relax and recover its shape elastically so that it expands radially and tightly grips the interior surface of the pipe to be lined.

In roll-down the liner 5 is selected to have a larger external diameter than the internal diameter of the pipe 1 to be lined. The liner 5 is then passed under tension through a set of reduction rolls to reduce its external diameter to less than that of the pipe 1 to be lined. A portion of the liner 5 is allowed to protrude from the end of the pipe 1. The liner 5 is then allowed to relax and recover its shape elastically so that it expands radially and tightly grips the interior surface of the pipe 1 to be lined.

Any other suitable method of lining the pipe can be used, of course.

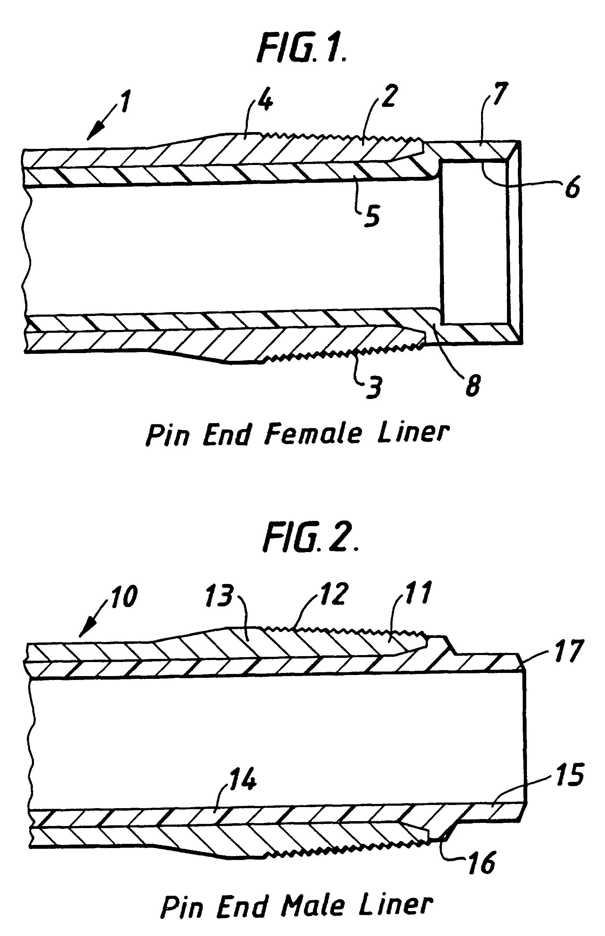

Referring to Figure 2, the second pipe 10 which is also of steel has an externally threaded end 11 in which like the pipe 1 the threads 12 are formed on an outwardly tapering thickened portion 13, the threads 12 themselves tapering inwardly towards the end of the pipe 10. Located within pipe 10 is a second, male-type liner 14 which is of a suitable plastics material such as polyethylene. The liner 14 terminates in a portion 15 protruding from the end 11 of the pipe 10. The portion 15 generally has the same internal and external diameter as the rest of the liner 14 except that it is provided with an external circumferential abutment 16 rearward of the end 17 of the portion 15 to engage against the end 11 of the pipe 10.

As with the first pipe 1 the second pipe 10 may be lined with the second liner 14 by any of the conventional processes previously described. The pipes 1 and 10 may each be provided with a similar arrangement as that shown in Figures 1 and 2 at their opposite ends to permit a series of lined pipes 1 and 10 to be connected together.

In order to form the flange 7 and shoulder 8 on the liner 5 and the abutment 16 on the liner 14 the relevant unformed portions 6 and 15 (not shown) on the relevant liners 5 and 14 are each heated and pressed inside a suitably internally shaped die (not shown), there being a suitably designed die for each liner 5 or 14. Otherwise the machine and process for forming the female and male shapes on the portions 6 and 15 are conventional.

Referring to Figure 2 a collar 20 is provided to connect the two ends 2 and 11 of the two pipes 1 and 10 together. The collar 20 has internally thereof tapering threaded portions 21, 22 which extend longitudinally inwardly from each end of the collar 20 and meet a central straight threaded portion 23 of minimum diameter. In use, the portion 21 engages with the threaded end 2 of pipe 1, the central portion 21 is caused to bite into the outer surface of the flange 7 and the portion 22 engages with the threaded end 12 of the pipe 10.

The portion 21 of the collar 20 is screwed onto the threaded end of pipe 1 so that the central portion 21 of the collar 20 engages and bites into the flange 7. Then the threaded portion 12 of pipe 10 is screwed into the threaded portion 22 of the collar 20 so that the portion 15 of the liner 14 is overlapped by and is sealingly engaged by the flange 7 of the liner 5, the collar 20 and portions 7 and 15 being dimensioned to provide such a seal.

## Claims

1. A pipe joint comprising a first pipe (1) having an externally threaded end (2), a second pipe (10) having an externally threaded end, a first liner extending into the first pipe (1) with a portion (6) protruding from the end (2) of the first pipe, a second liner (14) extending into the second pipe (10), with a portion (15) protruding from the end (11) of the second pipe, wherein, in use, the portion (6) of the first liner (5) overlaps the portion (15) of the second liner (14), a collar (20) having internal threads (21,22,23) which engage the threaded ends (2,11) of the pipes (1,10), the first and second pipe ends (2,11), collar (20) and portions (6,15) being dimensioned such that on making up the joint by threading the collar (20) to the first and second ends (2,11) of the pipes (1,10), the portions (6,15) sealingly abut each other where they overlap.

2. A pipe joint as claimed in claim 1 in which the first liner (5) has a flange (7) which, in use, overlaps the portion (15) of the second liner (14).

3. A pipe joint as claimed in claim 1 or claim 2 in which the portion (15) of the second liner (14) has an external circumferential abutment (16) for engagement with the overlapping portion (6) of the first liner (5).

## Patentansprüche

1. Rohrverbindung, welche ein erstes Rohr (1) mit einem externen Ende (2), das mit einem Gewinde versehen ist, und ein zweites Rohr (10) mit einem externen Ende (11), das mit einem Gewinde versehen ist, eine erste Buchse (5), welche sich in das erste Rohr (1) mit einem Abschnitt (6) erstreckt, welcher von dem Ende (2) des ersten Rohrs (1) hervorsteht, und eine zweite Buchse (14) aufweist, welche sich in das zweite Rohr (10) mit einem Abschnitt (15) erstreckt, welcher von dem Ende (11) des zweiten Rohrs hervorsteht, wobei im Gebrauch der Abschnitt (6) der ersten Buchse (5) den Abschnitt (15) der zweiten Buchse (14) überlappt, und wobei ein Kragen (20) mit inneren Gewinden (21, 22, 23) vorgesehen ist, welche mit den Gewindeenden (2, 11) der Rohre (1, 10) im Eingriff sind, wobei die ersten und zweiten Rohrenden (2, 11), der Kragen (20) und die Abschnitte (6, 15) derart dimensioniert sind, dass bei der Verbindungserstellung durch das Verschrauben des Kragens (20) mit den ersten und zweiten Enden (2, 11) der Rohre (1, 10) sich die Abschnitte (6, 15) abdichtend aneinander anlegen, wo sich diese überlappen.

2. Rohrverbindung nach Anspruch 1, wobei die erste Buchse (5) einen Flansch (7) aufweist, welcher im Gebrauch den Abschnitt (15) der zweiten Buchse (14) überlappt.

3. Rohrverbindung nach Anspruch 1 oder nach Anspruch 2, wobei der Abschnitt (15) der zweiten Buchse (14) eine externe Anlage (16) in Umfangsrichtung umfasst, um für den Eingriff mit dem überlappenden Abschnitt (6) der ersten Buchse (5) zu sorgen.

## Revendications

1. Jonction de tuyaux, comprenant un premier tuyau (1) ayant une extrémité filetée de manière externe (2) et un deuxième tuyau (10) ayant une extrémité filetée de manière externe (11), un premier doublage (5) s'étendant à l'intérieur du premier tuyau (1) avec une partie (6) faisant saillie depuis l'extrémité (2) de ce premier tuyau, un deuxième doublage (14) s'étendant à l'intérieur du deuxième tuyau (10) avec une partie (15) faisant saillie depuis l'extrémité (11) du deuxième tuyau, pour laquelle, à l'utilisation, la partie (6) du premier doublage (5) recouvre la partie (15) du deuxième doublage (14), une collerette (20) comportant des filetages internes (21, 22, 23) s'adaptant aux extrémités filetées (2, 11) des tuyaux (1, 10), les extrémités (2, 11) des premier et deuxième tuyaux, la collerette (20) et les parties (6, 15) étant dimensionnées de sorte qu'en constituant la jonction, en vissant la collerette (20) sur les première et deuxième extrémités (2, 11) des tuyaux (1, 10), les parties (6, 15) viennent, de manière étanche, en butée l'une contre l'autre à l'emplacement où elles se recouvrent.

2. Jonction de tuyau selon la revendication 1, pour laquelle le premier doublage (5) comporte un rebord (7) qui, à l'utilisation, recouvre la partie (15) du deuxième doublage (14).

3. Jonction de tuyau selon la revendication 1 ou la revendication 2, pour laquelle la partie (15) du deuxième doublage (14) comporte une butée circonférencielle (16) pour venir au contact de la partie la recouvrant (6) du premier doublage (5).
